(19) **Europäisches Patentamt**

**European Patent Office**

**Office européen des brevets**

(11) **EP 1 725 078 A1**

(12) **EUROPÄISCHE PATENTANMELDUNG**

(43) Veröffentlichungstag:
22.11.2006 Patentblatt 2006/47

(51) Int Cl.:
*H05B 33/08* (2006.01)   *H01S 5/042* (2006.01)

(21) Anmeldenummer: 06009194.9

(22) Anmeldetag: 04.05.2006

(84) Benannte Vertragsstaaten:
**AT BE BG CH CY CZ DE DK EE ES FI FR GB GR HU IE IS IT LI LT LU LV MC NL PL PT RO SE SI SK TR**
Benannte Erstreckungsstaaten:
**AL BA HR MK YU**

(30) Priorität: **10.05.2005 DE 102005022612**

(71) Anmelder: **ATMEL Germany GmbH**
**74072 Heilbronn (DE)**

(72) Erfinder: **Bergmann, Günther, Dr.**
**89134 Blaustein (DE)**

(54) **Treiberschaltung für elektronische Bauteile**

(57) Vorgestellt wird eine Treiberschaltung (10) für elektronische Bauteile (22) mit einem Verstärker (26), der aus einem Referenzsignal (Iin) ein Steuersignal (ID) erzeugt, einem Treiberstromspiegel (28), einem zwischen dem Verstärker (26) und dem Treiberstromspiegel (28) angeordneten Steuersignalschalter (30), der den Treiberstromspiegel (28) wahlweise von dem Verstärker (26) trennt oder mit dem Verstärker (26) verbindet, wobei der Treiberstromspiegel (28) in einem mit dem Verstärker (26) verbundenen Zustand das Steuersignal (ID) zu einem Treibersignal (Iout) verstärkt, und einer Kompensationsschaltung (34), die ein Korrektursignal (KS) in Abhängigkeit von einem Fehlerstrom (dI) des Treiberstromspiegels (28) erzeugt und an einem Eingang des Verstärkers (26) bereitstellt, dadurch gekennzeichnet, dass ein Rückführsignaleingang des Verstärkers (26) über eine Rückführung (32) von einem aus einem Steuerzweig (38) des Treiberstromspiegels (28) ausgekoppelten Rückführsignal (RS) gespeist wird und die Kompensationsschaltung (34) das Korrektursignal (KS) additiv an einem Eingang des Verstärkers (26) bereitstellt.

FIG.1

EP 1 725 078 A1

**Beschreibung**

Die Erfindung betrifft eine Treiberschaltung für elektronische Bauteile mit einem Verstärker und einem Steuerstromtransistor, die aus einem Referenzsignal ein Steuersignal erzeugen, einem Treiberstromspiegel, einem zwischen dem Verstärker und dem Treiberstromspiegel angeordneten Steuersignalschalter, der den Treiberstromspiegel wahlweise von dem Steuerstromtransistor trennt oder mit dem Steuerstromtransistor verbindet, wobei der Treiberstromspiegel in einem mit dem Steuerstromtransistor verbundenen Zustand das Steuersignal zu einem Treibersignal verstärkt.

Eine solche Treiberschaltung ist per se bekannt und wird zum Beispiel zum Treiben von Laserdioden verwendet. Bei ebenfalls bekannten einfachen Treiberschaltungen wird der Steuerstrom durch eine Gegenkopplung stabilisiert, bei der ein Rückführsignaleingang des Verstärkers über eine Rückführung von einem aus einem Steuerzweig des Treiberstromspiegels ausgekoppelten Rückführsignal gespeist wird.

Beim Treiben elektronischer Bauteile soll ein als Treibersignal dienender Treiberstrom durch einen Referenzstrom einstellbar sein, mit dem der Verstärker ausgesteuert wird. Dabei soll die Verstärkung der Treiberschaltung, also der Quotient aus dem Treiberstrom und dem Referenzstrom, sowohl von der Höhe des Referenzstroms, von der Höhe des Treiberstroms, und von der Temperatur der beteiligten Komponenten möglichst unabhängig sein und auch bei in großen Stückzahlen hergestellten zu treibenden Bauteilen und Treiberschaltungen möglichst gleich sein.

Die Bandbreite der Verstärkung liegt bei Laserdioden-Treibern für heutige CD/DVD Laufwerke bei etwa 1 MHz. Wegen dieser vergleichsweise geringen Bandbreite kann der Treiberstrom, der im sub-Nanosekunden Bereich geschaltet werden muss, nicht durch eine entsprechende Puls-Ansteuerung des Referenzstroms erfolgen. Vielmehr erfolgt die Tastung über enable-Signale, die den Steuerstrom unmittelbar vor dem als Ausgangsstufe dienenden Treiberstromspiegel mit Hilfe des genannten Steuersignalschalters wahlweise in den Treiberstromspiegel oder in andere Schaltungsteile einspeisen.

Das gewünschte Strom-Übersetzungsverhältnis zwischen Treiberstrom und Steuerstrom des Treiberstromspiegels liegt typischerweise im Bereich zwischen 5 und 20. Aus Gründen eines geringen Stromverbrauchs ist ein hohes Übersetzungsverhältnis günstig. Im Hinblick auf eine möglichst hohe Schaltgeschwindigkeit ist ein eher niedriges Übersetzungsverhältnis vorzuziehen.

Stromspiegel werden unter Verwendung von Transistoren realisiert. Bekanntlich ist die Stromverstärkung beta von Bipolartransistoren, also der Quotient von Kollektorstrom IC und Basisstrom IB, bei der in großen Stückzahlen erfolgenden Herstellung Integrierter Schaltungen größeren Streuungen unterworfen (beispielsweise zwischen 30 und 100). Darüber hinaus ist die Stromverstärkung vom Kollektorstrom abhängig. Die genannten Streuungen übertragen sich auf das Verhalten des Treiberstromspiegels, so dass dessen Verstärkung, unter der hier der Quotient aus Treiberstrom und Steuerstrom verstanden wird, mit der Folge streut, dass die gesamte Verstärkung der Treiberschaltung ebenfalls die unerwünschten Streuungen aufweist.

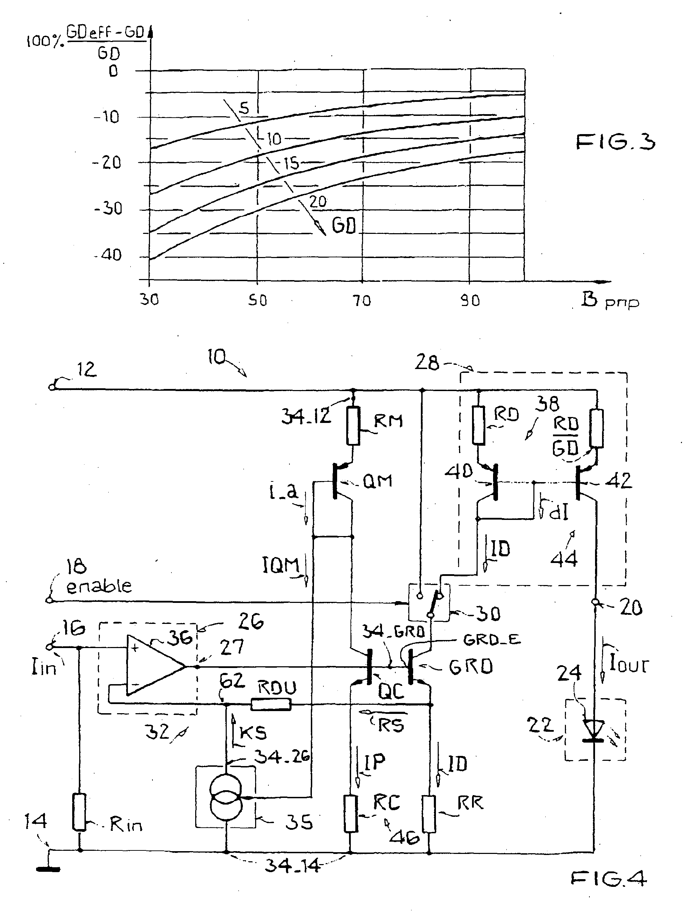

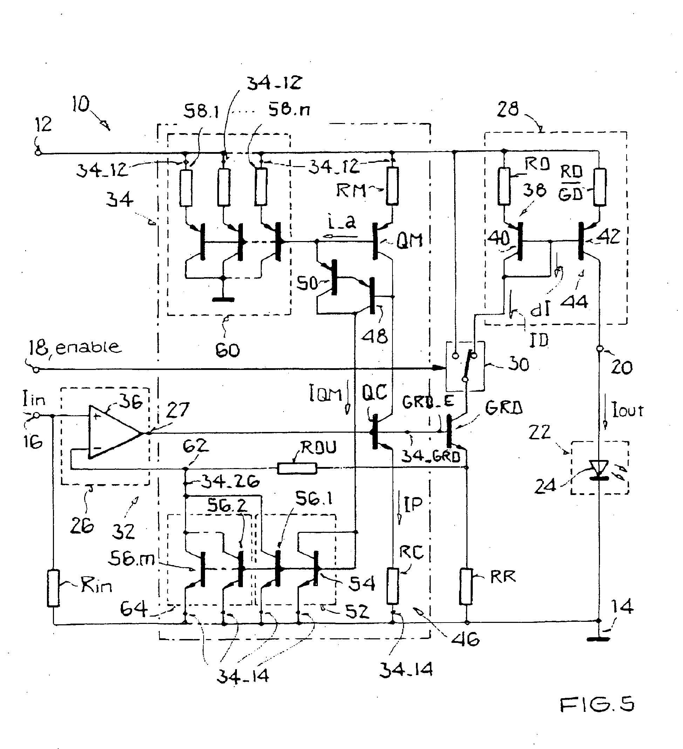

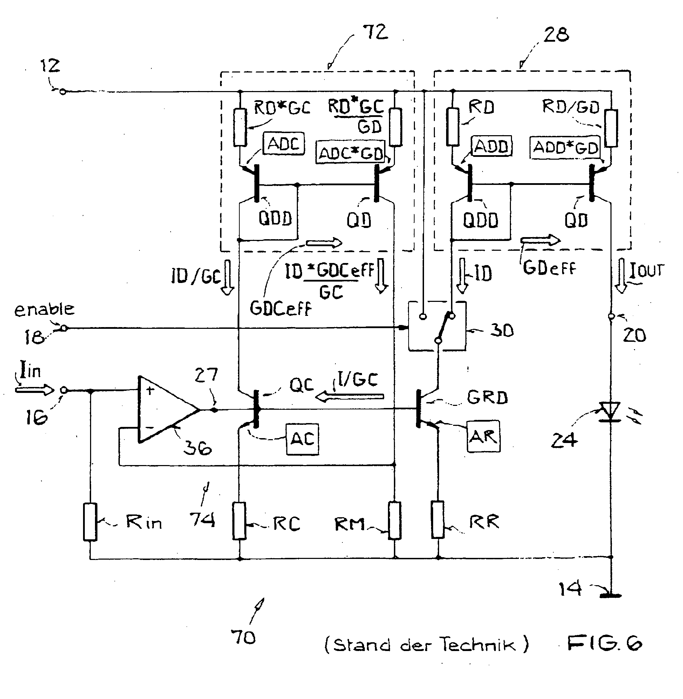

Zur Kompensation der Streuungen dient bei der bekannten Treiberschaltung (vergleiche Fig. 6) eine Kompensationsschaltung, die ebenfalls einen Stromspiegel aufweist, der im Folgenden zur Unterscheidung von dem Treiberstromspiegel als Kompensationsstromspiegel bezeichnet wird. Der Kompensationsstromspiegel ist immer mit dem Verstärker verbunden. Die den Verstärker stabilisierende Rückführung ist an einen Steuerzweig des Kompensationsstromspiegels angeschlossen. Dies unterscheidet die eingangs genannte bekannte Treiberschaltung mit Kompensationsstromspiegel von der ebenfalls bekannten einfachen Treiberschaltung, deren Rückführung aus dem Steuerzweig des Treiberstromspiegels gespeist wird.

Die bekannte Kompensation basiert darauf, dass der mit der Rückführung des Verstärkers gekoppelte Kompensationsstromspiegel dem Treiberstromspiegel möglichst weitgehend gleicht und insbesondere eine gleiche effektive Stromverstärkung aufweist. Wie weiter unten noch näher erläutert wird, lässt sich die Verstärkung der gesamten Anordnung dann über eine Dimensionierung bestimmter Widerstände einstellen. Deren Gleichlauf-Eigenschaften (matching) sind bei einer monolithischen Integration der Schaltung im Gegensatz zu den Eigenschaften der Transistoren inhärent gut.

Die bekannte Kompensation benötigt jedoch vergleichsweise viel Strom, sie erzeugt einen zusätzlichen Rauschbeitrag, und der Stromspiegelfehler des Kompensationsstromspiegels, der durch Prozesstoleranzen hervorgerufen wird, geht voll in den Betrag der Verstärkung ein. Kritisch ist insbesondere, dass sich steigende Anforderungen an die Rauscharmut des Treiberstroms mit der bekannten Kompensationsschaltung nicht erfüllen lassen.

Vor diesem Hintergrund besteht die Aufgabe der Erfindung in der Angabe einer verbesserten Treiberschaltung, die weniger Strom braucht und insbesondere ein verbessertes Signal/Rausch-Verhältnis aufweist.

Diese Aufgabe wird bei einer Treiberschaltung der eingangs genannten Art dadurch gelöst, dass eine Kompensationsschaltung zwischen einem Eingang des Steuerstromtransistors und einem Eingang des Verstärkers liegt, ein Korrektursignal erzeugt und das Korrektursignal additiv in einen Eingang des Verstärkers einspeist.

Damit wird ein grundsätzlich anderer Ansatz zur Kompensation des Fehlerstroms des Treiberstromspiegels vorgeschlagen. Im Gegensatz zu den genannten einfachen Treiberschaltungen erlaubt die Erfindung eine Kompensation des Fehlerstroms und damit eines Stromübersetzungsfehlers des Treiberstromspiegels. Im Gegensatz zu der darüber hinaus bekannten Treiberschaltung, die bereits eine Kompensationsschaltung aufweist, ist erfolgt die Einspeisung des Korrektursignals bei der Erfindung additiv, so dass die im Rahmen der Erfindung verwendete Kompensationsschaltung lediglich einen additiven Offset für die Kompensation erzeugen muss. Bei der bekannten Kompensationsschaltung erfolgt die Bildung eines inhärent korrigierten Rückführsignals dagegen in dem Kompensationsstronispiegel, der daher den kompletten Rückführstrom tragen muss, während der im Treiberstromspiegel ohnehin fließende Steuerstrom nicht für die Rückführung genutzt wird. Das im Rahmen der Erfindung erzeugte additive Korrektursignal stellt im Vergleich dazu nur einen kleinen Beitrag dar. Das verringert sowohl die Stromaufnahme der erfindungsgemäßen Treiberschaltung als auch das Rauschen, da Fehler und Störungen (Rauschen) des additiven Korrektursignals ebenfalls klein sind und daher nur in reduzierter Form auf den Regelkreis einwirken, der durch die Rückführung geschlossen wird.

Mit Blick auf Ausgestaltungen der Treiberschaltung ist bevorzugt, dass ein Rückführsignaleingang des Verstärkers über eine Rückführung von einem aus einem Steuerzweig des Treiberstromspiegels ausgekoppelten Rückführsignal gespeist wird.

Dadurch wird der im Steuerzweig ohnehin fließende Strom auch für die Rückführung benutzt. Im Gegensatz dazu wird bei der bekannten Treiberschaltung die Rückführung von dem Kompensationsstromspiegel gespeist, der daher nicht nur das Korrektursignal, sondern auch noch das Rückführsignal erzeugen muss, was zu den erwähnten Nachteilen führt.

Bevorzugt ist auch, dass die Kompensationsschaltung einen Widerstand aufweist, der zwischen dem Ausgang des Steuerstromtransistors und einer Einspeisung des Korrektursignals liegt.

Durch diesen Widerstand wird das Potential am Punkt der Einspeisung des Korrektursignals verringert, was eine störungsfreie Einspeisung erlaubt.

Bevorzugt ist auch, dass die Kompensationsschaltung das Korrektursignal in Abhängigkeit von einem Fehlerstrom des Treiberstromspiegels erzeugt.

Dieses Merkmal erlaubt eine Bildung des Korrektursignals, das einen Stromübersetzungsfehler des Treiberstromspiegels passend kompensiert.

Bevorzugt ist auch, dass der Treiberstromspiegel einen Steuerzweig mit einem ersten Transistor und einem ersten Emitterwiderstand sowie einen Treiberzweig mit einem zweiten Transistor und einem zweiten Emitterwiderstand aufweist, wobei der Wert des zweiten Emitterwiderstands einem 1/GD-fachen des Werts des ersten Emitterwiderstands entspricht und eine Emitterfläche des zweiten Transistors einem GD-fachen der Emitterfläche des ersten Transistors entspricht.

Diese Skalierung der Emitterflächen gewährleistet, dass in dem ersten Transistor und dem zweiten Transistor die gleiche Emitterstromdichte vorliegt. Die Skalierung der genannten Emitterwiderstände führt dann auch zu einem gleichen Spannungsabfall über diesen Emitterwiderständen. Als erwünschte Folge stellt sich ein von der Temperatur und vom Kollektorstrom weitgehend unabhängiger effektiver Stromübersetzungsfaktor Gdeff ein, der jedoch noch von dem gewünschten Wert GD abweicht.

Bevorzugt ist auch, dass die Kompensationsschaltung einen Proportionalzweig mit einem dritten Transistor, einem vierten Transistor sowie einem dritten Emitterwiderstand des dritten Transistors und einem vierten Emitterwiderstand des vierten Transistors aufweist, wobei der dritte Transistor vom Ausgang des Verstärkers gesteuert wird.

Durch diese Ausgestaltung wird im Proportionalzweig ein zum Steuerstrom durch den Steuerzweig des Treiberstromspiegels proportionaler (jedoch kleinerer) Strom als Basiswert für eine Erzeugung eines Korrektursignals erzeugt.

Bevorzugt ist auch, dass eine Emitterfläche des dritten Transistors gleich dem Quotienten aus der Emitterfläche des Steuerstromtransistors im Zähler und dem Proportionalitätsfaktor im Nenner ist und dass der Wert des dritten Emitterwiderstands gleich einem GC-fachen des Emitterwiderstands des Steuerstromtransistors ist.

Durch diese Merkmale wird der Strom im Proportionalzweig auf das 1/GC-fache des Stroms durch den Steuerzweig verringert, was zu einem verringerten Stromverbrauch der Treiberschaltung beiträgt.

Ferner ist bevorzugt, dass der vierte Transistor vom gleichen Leitfähigkeitstyp wie der erste Transistor im Steuerzweig des Treiberstromspiegels und so dimensioniert ist, dass seine Emitterstromdichte der Emitterstromdichte des ersten Transistors entspricht.

Diese Ausgestaltung gewährleistet, dass der Basisstrom des vierten Transistors zu dem im Treiberstromspiegel auftretenden Fehlerstrom dI direkt proportional ist, was eine indirekte Erfassung des Fehlerstroms erlaubt.

Bevorzugt ist auch, dass das Korrektursignal durch eine steuerbare Stromquelle erzeugt wird, die von einem Basisstrom des vierten Transistors gesteuert wird.

In dem Basisstrom des vierten Transistors bildet sich der Stromfehler des Treiberstromspiegels ab. Die Steuerung der Stromquelle mit diesem Basisstrom führt daher zu einem von dem Stromfehler in erwünschter Weise abhängigen Korrektursignal.

Eine weitere bevorzugte Ausgestaltung zeichnet sich dadurch aus, dass das Korrektursignal über einen Korrektur-Stromspiegel aus einer Transistordiode und wenigstens einem weiteren Transistor erzeugt wird.

Die Erzeugung des Korrektursignals über einen Korrekturstromspiegel erlaubt eine Skalierung des Korrektursignals durch eine Variation der Zahl von Stromzweigen des Stromspiegels.

Ferner ist bevorzugt, dass die Bereitstellung des Korrektursignals über eine additive Verknüpfung des Korrektursignals mit dem Rückführsignal erfolgt. Alternativ ist bevorzugt, dass die Bereitstellung des Korrektursignals über eine additive Verknüpfung des Korrektursignals mit dem Referenzsignal erfolgt.

Dabei ist lediglich auf eine mit dem richtigen Vorzeichen erfolgende Überlagerung/Verknüpfung zu achten. Durch die alternativen Verknüpfungsmöglichkeiten werden die Freiheitsgrade beim Schaltungsdesign erhöht.

Bevorzugt ist auch, dass der Korrektur-Stromspiegel einen aus einer Basis des vierten Transistors ausgekoppelten Strom mit einem Faktor L skaliert und das L-fache des Stroms als Korrektursignal einem Rückführsignal an einem Knoten in der Rückführung überlagert.

Der ausgekoppelte Strom ist direkt proportional zum Fehlerstrom des Treiberstromspiegels, so dass diese Ausgestaltung ein zu diesem Fehlerstrom proportionales Korrektursignal bereitstellt.

Eine bevorzugte Verwendung der oben genannten Treiberschaltungen besteht darin, eine Laserdiode von ihrer Anodenseite her anzusteuern (high side - Steuerung), wie es bei heutigen Laserdioden in der Regel der Fall ist. Eine alternative Verwendung besteht darin, eine Laserdiode von ihrer Kathodenseite her anzusteuern (low side - Steuerung). Diese Alternativen belegen die breite Verwendbarkeit der hier vorgestellten Treiberschaltungen, die im Übrigen nicht auf Treiberschaltungen für Laserdioden beschränkt ist sondern auch andere elektronische Bauteile mit umfasst.

Weitere Vorteile ergeben sich aus der Beschreibung und den beigefügten Figuren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Zeichnungen

Ausführungsbeispiele der Erfindung sind in den Zeichnungen dargestellt und werden in der nachfolgenden Beschreibung näher erläutert. Es zeigen, jeweils in schematischer Form:

Fig. 1    ein erstes Ausführungsbeispiel einer Treiberschaltung mit einer erfindungsgemäß angeordneten Kompensationsschaltung;

Fig. 2    eine Strombilanz eines Treiberstromspiegels aus der Treiberschaltung der Fig 1;

Fig. 3    Verläufe einer Abweichung einer tatsächlichen Stromverstärkung Gdeff von einer gewünschten Stromverstärkung GD über einer Transistor-Stromverstärkung für den Treiberstromspiegel aus der Treiberschaltung der Fig. 1 in qualitativer Form;

Fig. 4    die Treiberschaltung aus der Fig. 1 mit einer konkreten schaltungstechnischen Ausgestaltung einer Kompensationsschaltung;

Fig.5    eine Treiberschaltung mit einer weiter konkretisierten schaltungstechnischen Ausgestaltung der Kompensationsschaltung; und

Fig. 6    eine per se bekannte Treiberschaltung.

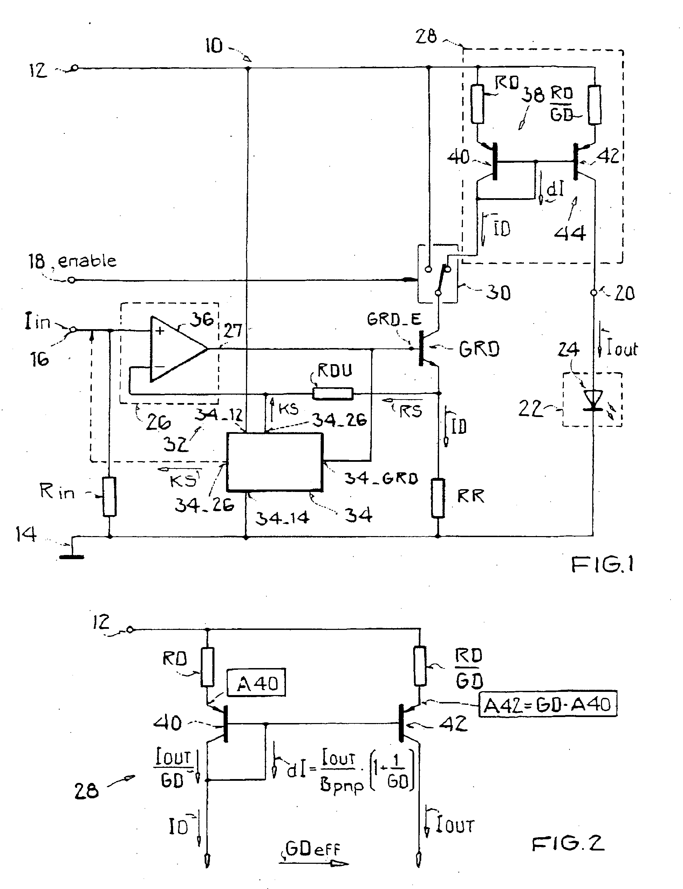

Im Einzelnen zeigt die Figur 1 eine Treiberschaltung 10, die elektrisch zwischen einem Versorgungspotentialanschluss 12 und einem Bezugspotentialanschluss 14 liegt. Die Treiberschaltung 10 weist einen Referenzsignaleingang 16, einen enable-Signaleingang 18 und einen Ausgang 20 auf. An den Ausgang 20 ist ein elektronisches Bauteil 22 angeschlossen. Das elektronische Bauteil 22 ist bei einer bevorzugten Verwendung der Treiberschaltung 10 eine Laserdiode 24 eines CD/DVD-Gerätes, die mit einem Treiberstrom Iout betrieben wird.

Bei einer solchen Verwendung weist ein zeitlicher Verlauf des Treiberstroms Iout Impulse variabler Höhe und Breite auf. Zur Erzeugung solcher Impulsformen weist die Treiberschaltung 10 einen Verstärker 26, einen Treiberstromspiegel 28 und einen Steuersignalschalter 30 auf. Eine Rückführung 32 dient zur Erhöhung der Bandbreite des Verstärkers 26 und zur Stabilisierung seines Ausgangssignals. Ferner weist die Treiberschaltung 10 einen Steuerstromtransistor GRD, dessen Leitfähigkeitsstrecke zusammen mit einem Emitterwiderstand RR in Reihe zwischen dem Bezugspotential 14 und dem Steuersignalschalter 30 liegt, sowie einen Referenzsignalwiderstand Rin auf.

Eine Kompensationsschaltung 34 liegt zwischen einem Eingang GRD_E des Steuerstromtransistors GRD und einem Eingang des Verstärkers 26. Dazu ist ein Eingang 34_GRD der Kompensationsschaltung 34 mit dem Eingang GRD_E und ein Ausgang 34_26 mit einem Eingang des Verstärkers 26 verbunden. In jedem Fall erzeugt die Kompensationsschaltung 34 ein Korrektursignal KS oder -KS und stellt es additiv an einem Eingang des Verstärkers 26 bereit.

Dabei kann die Bereitstellung durch Verknüpfen des Korrektursignals KS mit einem Rückführsignal RS (durchgezogene Verbindung von 34 und 32) oder durch Verknüpfen eines Korrektursignals -KS mit umgekehrtem Vorzeichen mit dem Referenzsignal (gestrichelte Verbindung) erfolgen. Zusätzlich ist die Kompensationsschaltung 34 über einen Anschluss 34_12 mit dem Versorgungspotentialanschluss 12 und über einen Anschluss 34_14 mit dem Bezugspotentialanschluss 14 verbunden.

Im Folgenden wird die Erfindung unter Konzentration auf die Ausgestaltung beschrieben, bei der das Korrektursignal KS additiv in den Rückführsignaleingang des Verstärkers 26 eingespeist wird. In diesem Fall dient ein. Widerstand RDU zur Erzeugung einer Potentialdifferenz zwischen dem Eingang GRD_E und einem Ausgang des Steuerstromtransistors GRD, die eine Einspeisung des Korrektursignals KS zwischen dem Widerstand RDU und dem Rückführsignaleingang des Verstärkers 26 erleichtert. Zur Einstellung der Impulshöhen im Treibersignal Iout wird der Verstärker 26 über seinen Referenzsignaleingang mit einem Referenzstrom Iin ausgesteuert. Der Verstärker 26 kann z.B. als Operationsverstärker 36 mit einem nichtinvertierenden Eingang "+", einem invertierenden Eingang "-", und dem Ausgang 27 realisiert sein. In diesem Fall wird das Referenzsignal Iin, bzw. ein von dem Referenzstrom Iin über dem Referenzsignalwiderstand Rin erzeugtes Potential, dem nichtinvertierenden Eingang des Operationsverstärkers 36 zugeführt, während dessen invertierender Eingang mit der Rückführung 32 verbunden ist. Über den Ausgang 27 des Operationsverstärkers 36 wird der Steuerstromtransistor GRD angesteuert, so dass in dessen Leitfähigkeitsstrecke ein Steuerstrom ID erzeugt wird.

Über den Steuersignalschalter 30 wird der Steuerstrom ID alternativ in den Versorgungspotentialanschluss 12 oder in einen Steuerzweig 38 des Treiberstromspiegels 28 eingespeist. Der Steuersignalschalter 30 wird durch ein enable-Signal über den enable-Signaleingang 18 betätigt. Dabei befindet sich der Steuersignalschalter 30 jeweils für eine über das enable-Signal vorbestimmte Zeitdauer, die einer Impulsbreite im Treibersignal Iout entspricht, im dargestellten Schaltzustand. Der in diesem Schaltzustand durch den Steuerzweig 38 fließende Steuerstrom ID wird durch die mit ersten und zweiten Emitterwiderständen RD und RD/GD versehenen ersten und zweiten Transistoren 40 und 42 des Treiberstromspiegels 28 als verstärkter Treiberstrom Iout in dessen Treiberzweig 44 übertragen. Dabei wird das Übersetzungsverhältnis zwischen Iout und dem Steuerstrom ID durch die Dimensionierung der Widerstände RD, RD/GD und die Emitterflächen der Transistoren 40, 42 vorbestimmt (Vergleiche auch Fig. 2).

Dabei entsprechen die Bezeichnungen der ersten und zweiten Emitterwiderstände RD und RD/GD Werten einer bevorzugten Ausgestaltung zur Erzielung eines gewünschten Übersetzungsverhältnisses GD. Analog entspricht die Emitterfläche des zweiten Transistors 42 im Rahmen dieser Ausgestaltung einem GD-fachen der Emitterfläche des ersten Transistors 40. Diese Skalierung der Emitterflächen gewährleistet, dass in den ersten und zweiten Transistoren 40 und 42 die gleiche Emitterstromdichte vorliegt. Die Skalierung der ersten und zweiten Emitterwiderstände RD, RD/GD führt dann auch zu einem gleichen Spannungsabfall über diesen Emitterwiderständen RD, RD/GD. Als erwünschte Folge stellt sich ein von der Temperatur und vom Kollektorstrom weitgehend unabhängiger Stromübersetzungsfaktor Gdeff ein, der jedoch noch von dem gewünschten Wert GD abweicht.

Die unerwünschte Abweichung resultiert aus einem unvermeidlichen Fehlerstrom dI des Treiberstromspiegels 28. Der Fehlerstrom dI hängt seinerseits von der Stromverstärkung der Transistoren 40, 42, vom als Kollektorstrom bereitgestellten Treibersignal Iout und von dem gewünschten Übersetzungsverhältnis GD ab. Werden pnp-Transistoren 40, 42 verwendet, so wird die Stromverstärkung auch als Bpnp bezeichnet und der Fehlerstrom dI berechnet sich mit diesen Bezeichnungen zu :

$$dI = \frac{Iout}{Bpnp} \cdot \left(1 + \frac{1}{GD}\right)$$

Wie bereits eingangs erwähnt wurde, ist die Stromverstärkung Bpnp bei der Herstellung Integrierter Schaltungen größeren Streuungen unterworfen (bspw. zwischen 30 und 100). Das führt dazu, dass der effektive Stromübersetzungsfaktor GDeff des Treiberstromspiegels 28 ebenfalls Streuungen aufweist, die sich in der Pulshöhe des Treiberstrom Iout abbilden.

Fig. 2 zeigt explizit eine Strombilanz des Stromspiegels 28. Dabei stellen die Größen A40 und A42 die Emitterflächen der Transistoren 40 und 42 dar. Aus der in Fig. 2 dargestellten Strombilanz lässt sich der Zusammenhang zwischen dem Steuerstrom ID und dem Treiberstrom Iout ablesen:

$$ID = \frac{Iout}{GD} \cdot \left(1 + \frac{GD}{Bpnp} + \frac{1}{Bpnp}\right)$$ oder $$Iout = GDeff \cdot ID$$ mit $$GDeff = \frac{GD}{1 + \frac{GD}{Bpnp} + \frac{1}{Bpnp}}$$

GDeff, die effektive Stromverstärkung, ist also insbesondere immer kleiner als die gewünschte Stromverstärkung GD.

Fig. 3 zeigt Verläufe einer Abweichung einer tatsächlichen Stromverstärkung Gdeff von einer gewünschten Stromverstärkung GD über einer Transistor-Stromverstärkung Bpnp für den Stromspiegel 28 aus der Treiberschaltung der Fig. 1 in %.

Der von der streuenden Stromverstärkung Bpnp abhängige Fehlerstrom dI wird bei der vorliegenden Erfindung durch die Kompensationsschaltung 34 kompensiert, die das Korrektursignal additiv an einem Eingang des Verstärkers bereitstellt. Ein von der Kompensationsschaltung 34 erzeugtes Korrektursignal liefert somit nur einen vergleichsweise kleinen Beitrag zum rückgekoppelten Signal. Fehler und Störungen (Rauschen bei der Erzeugung des Korrektursignals in der Kompensationsschaltung 34 gehen deshalb nur mit einer entsprechend geringen Größenordnung in das Rückführsignal ein und stellen daher nur eine entsprechend kleine Störung des Regelkreises des Verstärkers 26 dar.

Figur 4 zeigt die Treiberschaltung 10 aus der Figur 1 mit einer konkreten schaltungstechnischen Ausgestaltung der Kompensationsschaltung 34, wobei diese durch die zwischen ihren Anschlüssen 34_12, 34_14, 34_GRD und 34_26 liegenden Elemente RM, QM, QC, RC und 35 gebildet wird. Diese Kompensationsschaltung 34 weist einen Proportionalzweig 46 mit einem dritten Transistor QC, einem vierten Transistor QM sowie einem dritten Emitterwiderstand RC des dritten Transistors QC und einem vierten Emitterwiderstand RM des vierten Transistors QM auf.

Der dritte Transistor QC wird, wie auch der Steuerstromtransistor GRD, vom Ausgang 27 des Verstärkers 26 gesteuert. Daher ist der im Proportionalzweig 46 fließende Strom IP proportional zum Steuerstrom ID durch den Steuerzweig 38 des Treiberstromspiegels 28. Um eine Proportionalität

$$IP = \frac{1}{GC} \cdot ID$$

zu erzielen, wird der dritte Transistor QC so dimensioniert, dass seine Emitterfläche gleich dem Quotienten aus der Emitterfläche des Steuerstromtransistors QRD im Zähler und dem Proportionalitätsfaktor GC im Nenner ist. Analog dazu muss der dritte Emitterwiderstand RC so dimensioniert werden, dass sein Widerstand dem GC-fachen des Emitterwiderstands RR entspricht.

Der vierte Transistor QM ist vom gleichen Leitfähigkeitstyp wie der erste Transistor 40 im Steuerzweig 38 des Treiberstromspiegels 28 und ist so dimensioniert, dass seine Emitterstromdichte der Emitterstromdichte des ersten Transistors 40 entspricht. Bei einer Herstellung der Treiberschaltung 10 als Integrierte Schaltung weist seine Verstärkung Bpnp dann ebenfalls Streuungen auf. Diese herstellungsbedingten Streuungen treten aber in der Regel nur von Schaltung zu Schaltung, nicht aber innerhalb einer einzigen Schaltung auf. Bei einer Herstellung der Treiberschaltung 10 als Integrierte Schaltung wird der erste Transistor 40 zusammen mit dem vierten Transistoren QM innerhalb eines einzigen Prozesses hergestellt, so dass beide Transistoren 40, QM gleiche Schwankungen ihrer Stromverstärkung Bpnp aufweisen. Da beide Transistoren QM und 40 als Transistordioden mit gleicher Emitterstromdichte angeschlossen sind, ist der Basisstrom i_a des vierten Transistors QM direkt zu dem im Treiberstromspiegel 28 auftretenden Fehlerstrom dI proportional.

Dieser Basisstrom i_a wird beim Gegenstand der Fig. 4 zur Steuerung einer steuerbaren Stromquelle 35 verwendet, die dann ein von der Stromverstärkung Bpnp der Transistoren 40, 42 des Treiberstromspiegels 28 abhängiges Korrektursignal KS erzeugt. Der als Steuersignal der Stromquelle wirkende Basisstrom oder Anteil IQM des Basisstroms i_a des vierten Transistors QM ergibt sich dann mit einem Faktor K als

$$IQM = K \cdot \frac{ID}{GC \cdot Bpnp}$$

Der Faktor K hängt von der Art der Auskopplung des Steuersignals IQM aus dem Basisstrom i_a ab.

Unter der Voraussetzung, dass die Stromquelle 35 ihr Steuersignal mit einem Faktor L skaliert, zieht sie das L-fache des Stroms IQM von einem Knoten 62 in der Rückführung 32 ab, was einer additiven Verknüpfung/Überlagerung (einer negativen Größe) entspricht. Über einem in der Rückführung 32 angeordneten Widerstand RDU verursacht das L-fache des aus dem Basisstrom ausgekoppelten Steuersignals entsprechend eine Korrekturspannung dU, für die gilt:

$$dU = L \cdot i\_a \cdot RDU = L \cdot K \cdot \frac{RDU \cdot ID}{GC \cdot Bpnp} = L \cdot K \frac{RC \cdot RDU \cdot ID}{RR \cdot Bpnp}$$

Dieses dU ruft über die Rückführung 32 einen zusätzlichen Ansteuerstrom dzI als Korrektur des Steuerstroms ID hervor der sich wie folgt berechnet:

$$dzI = L \cdot K \frac{RC \cdot RDU \cdot ID}{RR \cdot RR \cdot Bpnp}$$

Durch Wahl der Faktoren L, K kann dzI so eingestellt werden, dass sich genau der im Treiberstromspiegel 28 fehlende Fehlerstrom dI ergibt, so dass dieser Fehlerstrom dI kompensiert wird.
Figur 5 zeigt die Treiberschaltung 10 aus der Figur 1 mit einer weiter konkretisierten schaltungstechnischen Ausgestaltung der Kompensationsschaltung 34. Die Kompensationsschaltung 34 der Figur 2 weist einen Proportionalzweig 46 mit einem dritten Transistor QC, einem vierten Transistor QM sowie einem dritten Emitterwiderstand RC des dritten Transistors QC und einem vierten Emitterwiderstand RM des vierten Transistors QM auf.
Der dritte Transistor QC wird, wie auch der Steuerstromtransistor QRD, vom Ausgang 27 des Verstärkers 26 gesteuert. Daher ist der im Proportionalzweig 46 fließende Strom IP proportional zum Steuerstrom ID durch den Steuerzweig 38 des Treiberstromspiegels 28. Um eine Proportionalität

$$IP = \frac{1}{GC} \cdot ID$$

zu erzielen, wird der dritte Transistor QC so dimensioniert, dass seine Emitterfläche gleich dem Quotienten aus der Emitterfläche des Steuerstromtransistors QRD im Zähler und dem Proportionalitätsfaktor GC im Nenner ist. Analog dazu muss der dritte Emitterwiderstand RC so dimensioniert werden, dass sein Widerstand dem GC-fachen des Emitterwiderstands RR entspricht.
Der vierte Transistor QM ist vom gleichen Leitfähigkeitstyp wie der erste Transistor 40 im Steuerzweig 38 des Treiberstromspiegels 28 und ist so dimensioniert, dass seine Emitterstromdichte der Emitterstromdichte des ersten Transistors 40 entspricht. Bei einer Herstellung der Treiberschaltung 10 als Integrierte Schaltung weist seine Verstärkung Bpnp dann ebenfalls Streuungen auf. Diese herstellungsbedingten Streuungen treten aber in der Regel nur von Schaltung zu Schaltung, nicht aber innerhalb einer einzigen Schaltung auf. Bei einer Herstellung der Treiberschaltung 10 als Integrierte Schaltung wird der erste Transistor 40 zusammen mit dem vierten Transistoren QM innerhalb eines einzigen Prozesses hergestellt, so dass beide Transistoren 40, QM gleiche Schwankungen ihrer Stromverstärkung Bpnp aufweisen. Da beide Transistoren QM und 40 als Transistordioden mit gleicher Emitterstromdichte angeschlossen sind, ist der Basisstrom i_a des vierten Transistors QM direkt zu dem im Treiberstromspiegel 28 auftretenden Fehlerstrom dI proportional.
Es bedarf daher nur noch einer Auskopplung dieses Basisstroms i_a und einer Skalierung dieses Basisstroms i_a zu einem Steuersignal IQM, um ein von der Stromverstärkung Bpnp der Transistoren 40, 42 des Treiberstromspiegels 28 abhängiges Korrektursignal KS zu erzeugen. Beim Gegenstand der Fig. 4 dienen die Transistoren 48 und 50 der Auskopplung, also zur Erzeugung des Steuersignals IQM. Bei der Kompensationsschaltung 34 aus der Figur 5 wird ein solches Korrektursignal KS über einen Korrekturstromspiegel 52 aus einer Transistordiode 54 und wenigstens einem weiteren Transistor 56.1 erzeugt, die beide als npn-Transistoren realisiert sind. Der aus dem Basisstrom des vierten Transistors QM in den Korrekturstromspiegel 52 eingespeiste Strom IQM ergibt sich dann mit einem Faktor K als

$$IQM = K \cdot \frac{ID}{GC \cdot Bpnp}$$

Der Faktor K hängt von den Transistoren 48, 50 und optional vorhandenen weiteren Koppelstromzweigen 58.1, ...., 58.n einer Koppelfaktorschaltung 60 ab.

Unter der Voraussetzung, dass der Korrekturstromspiegel 52 den Strom IQM mit einem Faktor L skaliert, zieht der Korrekturstromspiegel 52 das L-fache des Stroms IQM von einem Knoten 62 in der Rückführung 32 ab, was einer additiven Verknüpfung/Überlagerung (einer negativen Größe) entspricht. Über einem in der Rückführung 32 angeordneten Widerstand RDU verursacht das L-fache des Stroms IQM entsprechend eine Korrekturspannung dU, für die gilt:

$$dU = L \cdot IQM \cdot RDU = L \cdot K \cdot \frac{RDU \cdot ID}{GC \cdot Bpnp} = L \cdot K \frac{RC \cdot RDU \cdot ID}{RR \cdot Bpnp}$$

Dieses dU ruft über die Rückführung 32 einen zusätzlichen Ansteuerstrom dzI als Korrektur des Steuerstroms ID hervor der sich wie folgt berechnet:

$$dzI = L \cdot K \frac{RC \cdot RDU \cdot ID}{RR \cdot RR \cdot Bpnp}$$

Durch Wahl der Faktoren L, K kann dzI so eingestellt werden, dass sich genau der im Treiberstromspiegel 28 fehlende Fehlerstrom dI ergibt, so dass dieser Fehlerstrom dI kompensiert wird. Bevorzugt wird man, um den Stromverbrauch gering zu halten, die Stromvervielfachung durch den Korrekturstromspiegel 52 bewirken. Dazu kann der Korrekturstromspiegel 52 um eine L-Faktorschaltung 64 ergänzt werden, die den Korrekturstromspiegel 52 um weitere Transistoren 56.2, ..., 56.m erweitert, was für eine Vervielfachung des vom Knoten 62 subtrahierten Stroms und damit zu einer entsprechenden Einstellmöglichkeit für den Faktor L führt. Für große Werte von L kann der Korrekturstromspiegel 52 mit einem sogenannten β-helper, also einer Darlington-Schaltung, ausgestattet werden.

Soweit wie bisher beschrieben eignet sich die Treiberschaltung 10 insbesondere als Laserdiodentreiber für einen Kanal. Zur Pulsformung können weitere Kanäle verwendet werden, deren Ausgangsströme an einem vor der Laserdiode 24 angeordneten Summierknoten addiert werden. Der in den Figuren 1 und 4 dargestellte Stromspiegel 28 weist pnp Transistoren 40, 42 auf, weil die zur Zeit benutzten Laserdioden 24 von der Anodenseite her angesteuert werden, was auch als high side - Steuerung bezeichnet wird.

Die Schaltung kann jedoch bei einer Realisierung des Stromspiegels 28 mit npn-Transistoren und den damit einhergehenden Änderungen der übrigen Schaltungsteile, beispielsweise einer Umkehrung sämtlicher Polaritäten und Leitfähigkeitstypen, auch für eine sogenannte low side - Ansteuerung verwendet werden, bei der Laserdioden von der Kathodenseite her angesteuert werden. Es versteht sich ferner, dass solche high side - Treiberschaltungen und low side - Treiberschaltungen auch zusammen in einem Treiberschaltungsverbund betrieben werden können.

Eine weitere Alternative besteht darin, dass der vom Korrekturstromspiegel 52 erzeugte Strom, gegebenenfalls nach einer Invertierung, auch in den Referenzsignaleingang des Verstärkers 26 eingespeist werden kann.

Um die oben genannten Vorteile der Erfindung zu verdeutlichen, zeigt Fig. 6 eine per se bekannte Treiberschaltung 70, die einen Kompensationsstromspiegel 72 aufweist. Bei der Treiberschaltung 70 ist der Kompensationsstromspiegel 72 in eine Rückführung 74 des Verstärkers 36 geschaltet und so dimensioniert, dass er die gleiche effektive Stromverstärkung liefert wie der Treiberstromspiegel 28. Der vom Kompensationsstromspiegel gelieferte Strom erzeugt am Widerstand RM den gleichen Spannungsabfall, den der Eingangsstrom Iin an Rin erzeugt. Unter der genannten Voraussetzung gleicher effektiver Stromverstärkung ist die Verstärkung dann ausschließlich durch Widerstandsverhältnisse bestimmt. Diese lassen sich bei der monolithischen Integration recht genau einstellen. Die Zeichen A... in der Fig. 5 bezeichnen Emitterflächen. Die Pfeile GDCeff, 1/GC und Gdeff geben die Richtung und den Betrag einer Verstärkung an. Die mit R.... gekennzeichneten Elemente entsprechen Widerstandswerten. Ansonsten bezeichnen gleiche Ziffern in den Figuren 1, 4 und 5 jeweils gleiche Elemente.

Ein Unterscheid zu der Fig. 4 besteht darin, dass das Rückführsignal nicht aus dem Steuerzweig 38 des Treiberstromspiegels ausgekoppelt wird, sondern von dem Kompensationsstromspiegel 72 bereitgestellt wird. Der Kompensationsstromspiegel wird daher von dem vollständigen Rückführsignal und nicht nur von , einem kleinen Offset durchflossen. Das führt zu den eingangs genannten Nachteilen des hohen Stromverbrauchs und insbesondere zu einem im Vergleich zum Gegenstand der Figuren 1 und 4 sehr viel höheren Rauschanteil im Rückführsignal.

Aus einem Vergleich der Figuren 1, 4 und 6, die jeweils Ausgestaltungen der Erfindung zeigen, mit dem Stand der Technik, wie er in der Fig. 6 dargestellt ist, ergeben sich auch die folgenden beiden alternativen Formulierungen von Ausgestaltungen der Erfindung:

Alternative I:

Treiberschaltung (10) für elektronische Bauteile (22) mit einem Verstärker (26), der aus einem Referenzsignal (Iin) ein Steuersignal (ID) erzeugt, einem Treiberstromspiegel (28), einem zwischen dem Verstärker (26) und dem Treiberstromspiegel (28) angeordneten Steuersignalschalter (30), der den Treiberstromspiegel (28) wahlweise von dem Verstärker (26) trennt oder mit dem Verstärker (26) verbindet, wobei der Treiberstromspiegel (28) in einem mit dem Verstärker (26) verbundenen Zustand das Steuersignal (ID) zu einem Treibersignal (Iout) verstärkt, und einer Kompensationsschaltung (34), die ein Korrektursignal (KS) in Abhängigkeit von einem Fehlerstrom (dI) des Treiberstromspiegels (28) erzeugt und an einem Eingang des Verstärkers (26) bereitstellt. Ein Rückführsignaleingang des Verstärkers (26) wird über eine Rückführung (32) von einem aus einem Steuerzweig (38) des Treiberstromspiegels (28) ausgekoppelten Rückführsignal ((RS) gespeist und die Kompensationsschaltung (34) stellt das Korrektursignal (KS) additiv an einem Eingang des Verstärkers (26) bereit.

Alternative 11:

Treiberschaltung (10) für elektronische Bauteile (22) die einen Verstärker (26), einen Treiberstromspiegel (28) mit einem Steuerzweig (38) und einem Treiberzweig (42), und eine Kompensationsschaltung (34) aufweist, wobei der Steuerzweig (38) einen ersten Transistor 40 aufweist, der mit einem zweiten Transistor (QRD) in Reihe geschaltet ist, und wobei die Kompensationsschaltung (34) einen Fehlerstrom (dI) des Treiberstromspiegels (28) durch ein Kompensationssignal (KS) kompensiert. Die Treiberschaltung (10) weist einen Proportionalzweig (46) mit einem dritten Transistor (QC) und einem vierten Transistor (QM) auf, der dritte Transistor (QC) wird zusammen mit dem zweiten Transistor QRD von einem Ausgang des Verstärkers (26) gesteuert, Elemente (RM, QM, RD, 40), der Treiberschaltung (10) sind so dimensioniert, dass in dem ersten Transistor (40) und dem vierten Transistor (QM) gleiche Stromdichten herrschen, und die Kompensationsschaltung (34) wird von einem Basisstrom (i_a) des vierten Transistors (QM) gespeist, sie erzeugt das Kompensationssignal (KS) als zu dem Basisstrom (i_a) proportionales Signal, und sie verknüpft das Kompensationssignal (KS) additiv mit einem Signal an einem Eingang des Verstärkers (26).

**Patentansprüche**

1. Treiberschaltung (10) für elektronische Bauteile (22) mit einem Verstärker (26) und einem Steuerstromtransistor (GRD), die aus einem Referenzsignal (Iin) ein Steuersignal (ID) erzeugen, einem Treiberstromspiegel (28), einem zwischen dem Steuerstromtransistor (GRD) und dem Treiberstromspiegel (28) angeordneten Steuersignalschalter (30), der den Treiberstromspiegel (28) wahlweise von dem Steuerstromtransistor (GRD) trennt oder mit dem Steuerstromtransistor (GRD) verbindet, wobei der Treiberstromspiegel (28) in einem mit dem Steuerstromtransistor (GRD) verbundenen Zustand das Steuersignal (ID) zu einem Treibersignal (Iout) verstärkt, **dadurch gekennzeichnet, dass** eine Kompensationsschaltung (34) zwischen einem Eingang (GRD_E) des Steuerstromtransistors (GRD) und einem Eingang des Verstärkers (26) liegt, ein Korrektursignal (KS) erzeugt und das Korrektursignal (KS) additiv in den Eingang des Verstärkers (26) einspeist.

2. Treiberschaltung (10) nach Anspruch 1, **dadurch gekennzeichnet, dass** ein Rückführsignaleingang des Verstärkers (26) über eine Rückführung (32) von einem aus einem Steuerzweig (38) des Treiberstromspiegels (28) ausgekoppelten Rückführsignal (RS) gespeist wird.

3. Treiberschaltung (10) nach Anspruch 1 oder 2, **dadurch gekennzeichnet, dass** sie einen Widerstand (RDU) aufweist, der zwischen dem Ausgang des Steuerstromtransistors (GRD) und einer Einspeisung des Korrektursignals liegt.

4. Treiberschaltung (10) nach wenigstens einem der vorhergehenden Ansprüche, **dadurch gekennzeichnet, dass** die Kompensationsschaltung (34) das Korrektursignal (KS) in Abhängigkeit von einem Fehlerstrom (dI) des Treiberstromspiegels (28) erzeugt.

5. Treiberschaltung (10) nach wenigstens einem der vorhergehenden Ansprüche, **dadurch gekennzeichnet, dass** der Treiberstromspiegel (28) einen Steuerzweig (38) mit einem ersten Transistor (40) und einem ersten Emitterwiderstand (RD) sowie einen Treiberzweig .(44) mit einem zweiten Transistor (42) und einem zweiten Emitterwiderstand (RD/GD) aufweist, wobei ein Wert des zweiten Emitterwiderstands (RD/GD) einem 1/GD-fachen eines Wertes des ersten Emitterwiderstands (RD) entspricht und eine Emitterfläche des zweiten Transistors (42) einem GD-fachen einer Emitterfläche des ersten Transistors (40) entspricht.

6. Treiberschaltung (10) nach Anspruch 5, **dadurch gekennzeichnet, dass** die Kompensationsschaltung (34) einen Proportionalzweig (46) mit einem dritten Transistor (QC), einem vierten Transistor (QM) sowie einem dritten Emitterwiderstand (RC) des dritten Transistors (QC) und einem vierten Emitterwiderstand (RM) des vierten Transistors (QM) aufweist, wobei ein Eingang (QC_E) des dritten Transistors (QC) mit dem Eingang (QRD_E) des Steuerstromtransistors (GRD) verbunden ist.

7. Treiberschaltung (10) nach Anspruch 6, **dadurch gekennzeichnet, dass** eine Emitterfläche des dritten Transistors (QC) gleich einem Quotienten aus einer Emitterfläche des Steuerstromtransistors QRD im Zähler und einem Proportionalitätsfaktor GC im Nenner ist und dass ein Wert des dritten Emitterwiderstands (RC) gleich einem GC-fachen des Emitterwiderstands RR ist.

8. Treiberschaltung (10) nach Anspruch 7, **dadurch gekennzeichnet, dass** der vierte Transistor (QM) vom gleichen Leitfähigkeitstyp wie der erste Transistor (40) im Steuerzweig (38) des Treiberstromspiegels (28) und so dimensioniert ist, dass seine Emitterstromdichte einer Emitterstromdichte des ersten Transistors (40) entspricht.

9. Treiberschaltung (10) nach Anspruch 8, **dadurch gekennzeichnet, dass** das Korrektursignal (KS) durch eine steuerbare Stromquelle (35) erzeugt wird, die von einem Basisstrom (i_a) des vierten Transistors (QM) gesteuert wird.

10. Treiberschaltung (10) nach Anspruch 9, **gekennzeichnet durch** einen Korrektur-Stromspiegel (52) aus einer Transistordiode (54) und wenigstens einem weiteren Transistor (56.1) als steuerbarer Stromquelle.

11. Treiberschaltung (10) nach wenigstens einem der Ansprüche 1 bis 10, **dadurch gekennzeichnet, dass** eine Einspeisung des Korrektursignals (KS) über eine additive Verknüpfung des Korrektursignals (KS) mit dem Referenzsignal (Iin) erfolgt.

12. Treiberschaltung (10) nach wenigstens einem der Ansprüche 1 bis 10, **dadurch gekennzeichnet, dass** eine Einspeisung des Korrektursignals (KS) über eine additive Verknüpfung des Korrektursignals (KS) mit einem Rückführsignal (RS) erfolgt.

13. Treiberschaltung (10) nach Anspruch 10, **dadurch gekennzeichnet, dass** der Korrektur-Stromspiegel 52 einen aus einer Basis des vierten Transistors (QM) ausgekoppelten Strom IQM mit einem Faktor L skaliert und das L-fache des Stroms (IQM) als Korrektursignal (KS) einem Rückführsignal (RS) an einem Knoten (62) in der Rückführung (32) überlagert.

14. Verwendung einer Treiberschaltung (10) nach wenigstens einem der vorhergehenden Ansprüche als Treiberschaltung (10) für wenigstens eine Laserdiode (24), **dadurch gekennzeichnet, dass** die Laserdiode (24) von ihrer Anodenseite her angesteuert wird (high side - Steuerung).

15. Verwendung einer Treiberschaltung (10) nach wenigstens einem der Ansprüche 1 bis 12 als Treiberschaltung (10) für wenigstens eine Laserdiode (24), **dadurch gekennzeichnet, dass** die Laserdiode (24) von ihrer Kathodenseite her angesteuert wird (low side - Steuerung).

FIG.1

FIG.2

FIG.3

FIG.4

FIG.5

(Stand der Technik)    FIG. 6

**EP 1 725 078 A1**

**Europäisches Patentamt**

# EUROPÄISCHER RECHERCHENBERICHT

Nummer der Anmeldung

EP 06 00 9194

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | US 2005/073268 A1 (SCHRODINGER KARL ET AL) 7. April 2005 (2005-04-07) * Absätze [0051] - [0057]; Abbildungen * ----- | 1 | INV. H05B33/08 H01S5/042 |
| A | US 6 345 062 B1 (TAGUCHI TOYOKI ET AL) 5. Februar 2002 (2002-02-05) * Abbildungen 5-10 * ----- | 1 | |
| A | US 5 848 044 A (TAGUCHI ET AL) 8. Dezember 1998 (1998-12-08) * Abbildung 5 * ----- | 1 | |

| RECHERCHIERTE SACHGEBIETE (IPC) |
|---|
| H05B H01S |

Der vorliegende Recherchenbericht wurde für alle Patentansprüche erstellt

| Recherchenort | Abschlußdatum der Recherche | Prüfer |
|---|---|---|
| München | 31. Juli 2006 | Maicas, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
............................................................
& : Mitglied der gleichen Patentfamilie, übereinstimmendes Dokument

EPO FORM 1503 03.82 (P04C03)

15

**ANHANG ZUM EUROPÄISCHEN RECHERCHENBERICHT**
**ÜBER DIE EUROPÄISCHE PATENTANMELDUNG NR.**

EP 06 00 9194

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-07-2006

| Im Recherchenbericht angeführtes Patentdokument | Datum der Veröffentlichung | Mitglied(er) der Patentfamilie | Datum der Veröffentlichung |
|---|---|---|---|
| US 2005073268 A1 | 07-04-2005 | KEINE | |
| US 6345062 B1 | 05-02-2002 | KEINE | |
| US 5848044 A | 08-12-1998 | KEINE | |

Für nähere Einzelheiten zu diesem Anhang : siehe Amtsblatt des Europäischen Patentamts, Nr.12/82

EPO FORM P0461